# EUROPÄISCHE PATENTSCHRIFT

(11) **EP 1 982 080 B1**
(45) Veröffentlichungstag und Bekanntmachung des Hinweises auf die Patenterteilung: **22.08.2012**
(21) Anmeldenummer: 06725100.9
(22) Anmeldetag: 16.03.2006
(51) Int. Cl.: F16B 21/04, A47G 23/06

(54) **TABLETT MIT EINEM EINSEITIGEN TRÄGER**
TRAY HAVING A SINGLE-SIDE CARRIER
TABLETTE DOTEE D'UN SUPPORT D'UN SEUL COTE

(30) Priorität: 13.02.2006 DE 102006006600
(43) Veröffentlichungstag der Anmeldung: 22.10.2008
(73) Patentinhaber: KoMo GmbH, 64853 Ötzberg-Lengfeld (DE)
(72) Erfinder: MOCK, Wolfgang, 64853 Ötzberg-Lengfeld (DE)
(74) Vertreter: Meissner, Bolte & Partner
(86) Internationale Anmeldenummer: PCT/EP2006/060787
(87) Internationale Veröffentlichungsnummer: WO 2007/093223

(56) Entgegenhaltungen:
- WO-A-99/23921
- DE-U- 1 894 815
- DE-U1-202004 003 662
- JP-A- 2002 191 486
- US-A- 4 101 232
- US-A1- 2004 113 446

## Beschreibung

Die Erfindung betrifft ein Tablett mit einem einseitigen Träger, wobei ein oberer Haltegriff des Trägers über dem Mittel- oder Schwerpunkt einer Aufstellfläche des Tabletts angeordnet ist und der Träger in lösbarer Verbindung mit der Aufstellfläche steht, sowie zum Zweck der Verbindung zwischen Träger und Aufstellfläche ein auf der Aufstellfläche befindlicher Haltekörper vorgesehen ist, gemäß Oberbegriff des Patentanspruchs 1.

Ein gattungsgemäßes Tablett mit einem einseitige Träger ist aus dem deutschen Gebrauchsmuster 20 2004 003 662.2 vorbekannt. Bei diesem Tablett ist durch die mögliche Trennung von Haltegriff und Tablettfläche eine platzsparende Lagerung und ein vereinfachter Transport zu Versandzwecken möglich. Hierfür ist der Träger oder Traggriff zerlegbar und/oder zusammenklappbar ausgeführt und entsprechend mit der Aufstellfläche lösbar verbunden. Wie vorerwähnt, kann durch die lösbare Verbindung mit Ablage- oder Aufstellfläche der Träger jederzeit von der Aufstellfläche abgetrennt und gesondert gelagert werden. Nicht benutzte Aufstellflächen können ohne großen Aufwand gestapelt und damit ebenso platzsparend verstaut werden.

Der vorbekannte Träger weist eine auf der Aufstellfläche fixierte Grundbefestigung und einen mit der Grundbefestigung lösbar verbundenen Tragarm auf. Die Grundbefestigung verbindet den Tragarm des Trägers mit der Aufstellfläche. Weiterhin besitzt die Grundstellfläche eine auf der Aufstellfläche angeordnete Haftfläche. Diese gewährleistet eine zerstörungsfreie Verbindung zwischen Grundbefestigung und damit Tragarm und Aufstellfläche, die an einem an sich beliebigen Ort der Aufstellfläche angeordnet werden kann. Diese Haftfläche ist gemäß DE 20 2004 003 662.2 z.B. als Klebefläche, als Saugfläche oder als magnetische Fläche realisiert. Auch ist eine Schraub-, Niet- oder sonstige kraftschlüssige Verbindung vorgeschlagen worden.

Durch die Ausführung des vorbekannten Tabletts mit einem einseitigen Träger, wobei ein oberer Haltegriff des Trägers über dem Mittel- oder Schwerpunkt der Aufstellfläche angeordnet ist, besteht die Möglichkeit, analog einer kardanischen Aufhängung das Tablett pendelnd und schwingend zu bewegen, ohne dass auf dem Tablett befindliche Objekte, wie z.B. Gläser, Tassen mit Inhalt oder dergleichen verrutschen bzw. der Inhalt aus dem zu transportierenden Behältnis in unerwünschter Weise heraustritt.

Eine ähnliche Vorrichtung zum Tragen von Eβ- und Trinkgeräten ist aus der DE 698 13 279 T2 vorbekannt. Die dortige Vorrichtung umfasst eine Auflagefläche und einen Tragarm. Der Tragarm verläuft von der Auflagefläche aus in eine weitgehend mittige Position außerhalb des Schwerpunkts der Vorrichtung, wobei ein Griff vorgesehen ist, der über ein Kupplungsseil beweglich mit dem Tragarm verbunden ist. Das dort vorgesehene Kupplungsseil besteht aus einem elastischen verformbaren Material mit Elastizität und Drehsteifigkeit. Aufgrund der Flexibilität kann der Griff relativ zum Tragarm bewegt werden, während die Drehsteifigkeit gewährleistet, dass ein Drehen des Griffs um seine Längsachse zu einem Drehen der Auflagefläche führt. Eine solche Vorrichtung ist mit einer Hand benutzbar, wobei das auf das Handgelenk wirkende Drehmoment auf ein Minimum beschränkt bleibt. Beschleunigungs- und Abbremskräfte haben kaum Auswirkung auf den Füllstand der Eβ- und Trinkgefäße, so dass ein Verschütten des Inhalts weitgehend vermieden wird. Bei einer dortigen Weiterentwicklung kann der Griff in eine vertikale Stellung überführt werden, um das Tragen der Vorrichtung zu erleichtern. Ein Ausführungsbeispiel nach DE 698 13 279 T2 zeigt einen Tragarm, der über eine drehbare Verbindung an der Auflagefläche befestigt ist. Damit kann der Tragarm nach unten aus der Betriebsstellung in eine Abstellposition und umgekehrt gebracht werden. Die Betriebsstellung kann beispielsweise mittels einer elastischen Verriegelung, die in eine Ausnehmung in der drehbaren Verbindung einrastet, gesichert werden.

Die DE 698 13 279 T2 schlägt außerdem eine Einsteckbefestigung für den Tragarm vor, wobei diese zwei Kupplungsteile umfasst, die miteinander in Eingriff gelangen. Die eigentliche Arretierung erfolgt dahingehend, dass ein oberes Kupplungsteil an der Innenseite mit einer oder mehreren vorspringenden Verriegelungslaschen versehen ist. Das untere Ende des Tragarms besitzt hierzu komplementär eine oder mehrere entsprechende Verriegelungsausnehmungen. Durch Einpassen des rohrförmigen Unterteils des Tragarms in die Kupplungsteile gelangen die Verriegelungslaschen mit den Verriegelungsausnehmungen in Eingriff.
Nachteilig ist bei einer solchen Verbindung die Gefahr, dass aufgrund von Ermüdungserscheinungen der dort an der Innenwandung vorgesehenen Verriegelungslaschen die Gefahr des Herausrutschens des gesamten Tragarms besteht, insbesondere dann, wenn größere Lasten mit dem Tablett bewegt werden sollen.

Aus dem Vorgenannten ist es daher Aufgabe der Erfindung, ein weiterentwickeltes Tablett mit einem einseitigen Träger, wobei ein oberer Haltegriff des Trägers über dem Mittel- oder Schwerpunkt einer Aufstellfläche des Tabletts angeordnet ist, anzugeben, bei dem einerseits eine Lösbarkeit des Trägers von der Aufstellfläche realisiert werden kann, um eine platzsparende Lagerung zu ermöglichen, und andererseits die Verbindung zwischen Träger und Aufstell'fläche mit Hilfe eines Haltekörpers leicht ausgeführt werden kann und eine hohe Sicherheit gegen unerwünschtes Lösen der Verbindung auch bei einer größeren, auf der Aufstellfläche befindlichen Masse besteht.

Die Lösung der Aufgabe der Erfindung erfolgt durch ein Tablett gemäß der Merkmalskombination nach Patentanspruch 1, wobei die Unteransprüche mindestens zweckmäßige Ausgestaltungen und Weiterbildungen darstellen.

Bei dem erfindungsgemäßen Tablett weist der Haltekörper eine Durchgangsbohrung mit abgestuftem Durchmesser auf, wobei die Bohrung geringeren Durchmessers zum Träger und diejenige größeren Durchmessers zur Aufstellfläche orientiert ist.

In dem Bohrungsabschnitt mit dem geringeren Durchmesser befinden sich zwei gegenüberliegende, in Längsachsenrichtung nutförmig erstreckende Führungsausnehmungen.

Weiterhin weist der Bohrungsabschnitt des kleineren bzw. geringeren Durchmessers zwei gegenüberliegende, zu den Führungsausnehmungen versetzt angeordnete Rastrücksprünge auf, die sich vom Bohrungsabschnitt größeren Durchmessers in Richtung des Abschnitts mit dem geringeren Durchmesser erstrecken und in diesen eingearbeitet sind. Die versetzte Anordnung zwischen Führungsausnehmungen und Rastrücksprüngen beträgt bei einem bevorzugten Ausführungsbeispiel 90°.

Auf der Achse der Winkelhalbierenden zwischen den Führungsausnehmungen und den Rastrücksprüngen ist mindestens eine Anschlagfläche ausgebildet. Bei einer Ausführungsform befinden sich auf dieser Achse zwei gegenüberliegende Anschlagflächen.

Der Bohrungsabschnitt größeren Durchmessers nimmt ein Federelement auf. Die Unterseite des Federelements gelangt beim montierten Haltekörper mit der Oberseite der unter dem Haltekörper befindlichen Aufstellfläche in Kontakt. Die Federoberseite hingegen übt eine Kraft auf das entsprechende Ende des Trägers aus, das in die Durchgangsbohrung des Haltekörpers eingeführt wird.

Das dem Haltegriff abgewandte Ende des Trägers weist für die gewünschte sichere Verbindung zwei gegenüberliegende, rigide Führungs- und Rastnasen auf, welche beim Einschieben dieses Trägerendes in die Bohrung des Haltekörpers wie oben erwähnt, und zwar entlang der Führungsausnehmungen gleiten. Die Führungs- und Rastnasen greifen nach Drehung des Trägers relativ zum Haltekörper in die unterhalb der Führungsausnehmung befindlichen Rastrücksprünge ein und werden dort unter Kraftwirkung des Federelements sicher arretiert. Eine Beanspruchung findet hier bei Nutzung des Tabletts nur auf Zug statt. Bei dieser Zugbeanspruchung bleiben die Führungs- und Rastnasen des Trägers sicher und unverrückbar in den Rastrücksprüngen arretiert.

Beim Einschieben des Haltegriffs in den Haltekörper sorgen die auf der Achse einer Winkelhalbierenden angeordneten Anschlagflächen dafür, dass ein Überdrehen und damit Überspringen der Rastrücksprünge ausgeschlossen ist.

Bei einer bevorzugten Ausführungsform der Erfindung weist der Boden des Haltekörpers mindestens zwei Zentrierelemente auf, welchen komplementäre Zentriergegenelemente der Aufstellfläche zugeordnet sind.

Durch diese Zentrierelemente kann der Haltekörper in besonders einfacher Wiese exakt positioniert und leicht mit der Haltefläche verbunden werden, so dass sich auch eine quasi Endmontage beim Kunden ohne Probleme gestaltet.

Wiederum bevorzugt sind die Zentrierelemente im Boden des Haltekörper als konische oder kegelige Ausnehmungen ausgebildet. Die Zentriergegenelemente der Haltefläche weisen dementsprechend konische oder kegelige Ausprägungen auf. Diese konischen oder kegeligen Ausprägungen gelangen in Eingriff, d.h. in Formschluss zu den im Boden des Haltekörpers angeordneten konischen oder kegeligen Ausnehmungen.

Bevorzugt ist das Federelement eine Schraubendruckfeder, auch in Kegelform.

Weiterhin kann das Federelement als Tellerfeder ausgebildet sein.

Der Haltekörper besitzt bei einer Ausgestaltung eine Zylinderform, wobei die Haltekörperoberseite einen Rundungsradius im Sinne einer ästhetischen Formgestaltung aufweist.

Die Führungsausnehmungen, die Rastrücksprünge, die Führungs- und Rastnasen sowie das Federelement bilden ein Formgesperre. Formgesperre, die in beide Richtungen wirken, haben die Aufgabe, eine bestimmte Vorzugslage zu fixieren.

Der Haltegriff des Trägers besteht ausgestaltend aus einem Stab oder einem Rohr, dessen Durchmesser mindestens im Bereich der Führungs- und Rastnasen als Passung dem Durchmesser des Bohrungsabschnitts mit den Führungsausnehmungen entspricht. Die Passung ist hier so definiert, dass das Ende mit den Führungs- und Rastnasen leicht und trotzdem nahezu spielfrei in das obere Ende mit der entsprechender Bohrung im Haltekörper einführbar ist.

Zum Zweck der Erleichterung des Einführens weist das führungs- oder rastnasenseitige Ende des Rohrs oder Stabs eine umlaufende Fase und damit eine gewisse konische Form auf.

Das obere Ende des Trägers besitzt eine Bohrung zur Befestigung eines Griffbolzens, wobei der Griffbolzen senkrecht zum Träger verläuft und den eigentlichen Haltegriff bildet.

Der Griffbolzen kann ausgestaltend zweigeteilt ausgeführt werden.

Der Haltekörper wird bevorzugt mit der Aufstellfläche verschraubt. Hierbei nehmen die konischen oder kegeligen Ausprägungen in der Haltefläche die Köpfe der Befestigungsschrauben, die wiederum insbesondere als Senkschrauben ausgebildet sind, auf.

Die Erfindung soll nachstehend anhand eines Ausführungsbeispiels sowie unter Zuhilfenahme von Figuren näher erläutert werden.

Hierbei zeigen:
- Fig. 1: eine Darstellung des kompletten Tabletts mit befestigtem Träger und komplettem Haltegriff;
- Fig. 2: verschiedene Ansichten und eine Detaildarstellung der Ausführung der Aufstellfläche des Tabletts;
- Fig. 3: Detaildarstellungen des Trägers, insbesondere mit den an einem Ende angeordneten Führungs- und Rastnasen;
- Fig. 4: Darstellungen des zweigeteilten bolzenartigen Haltegriffs und
- Fig. 5: verschiedene Schnittdarstellungen sowie eine Draufsicht und eine Unteransicht des zylindrisch ausgebildeten Haltekörpers.

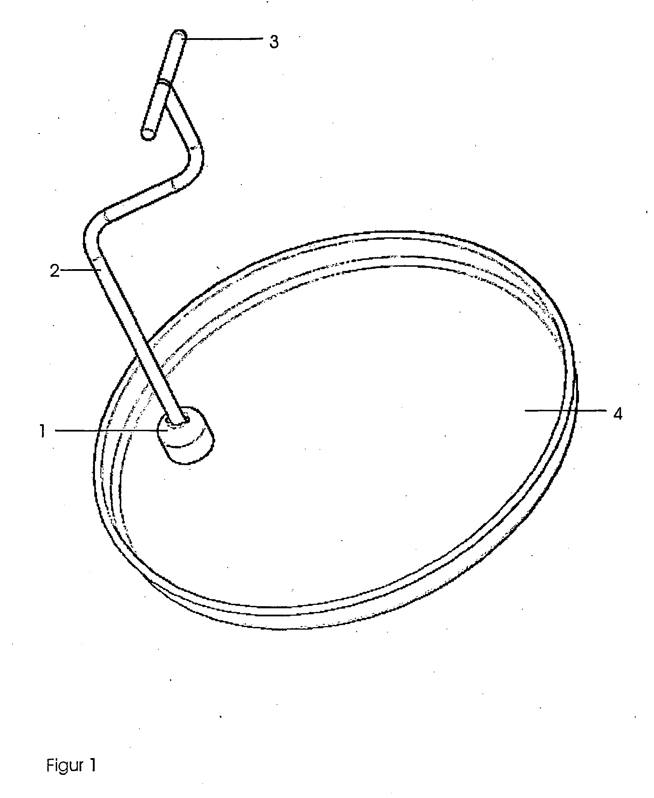

Das erfindungsgemäße Tablett gemäß Fig. 1 weist einen Haltekörper 1 auf, welcher außerhalb des Schwerpunkts des Tabletts, bevorzugt im Randbereich befindlich ist.

Der Haltekörper 1 nimmt einen Träger 2 auf, der als Rohr oder Stab ausgestaltet ist.

Am oberen Ende des Trägers 2 befindet sich ein bolzenartiger Haltegriff 3. Die Lage dieses Haltegriffs 3 befindet sich in etwa oberhalb des Mittel- oder Schwerpunkts der Aufstellfläche 4 des Tabletts.

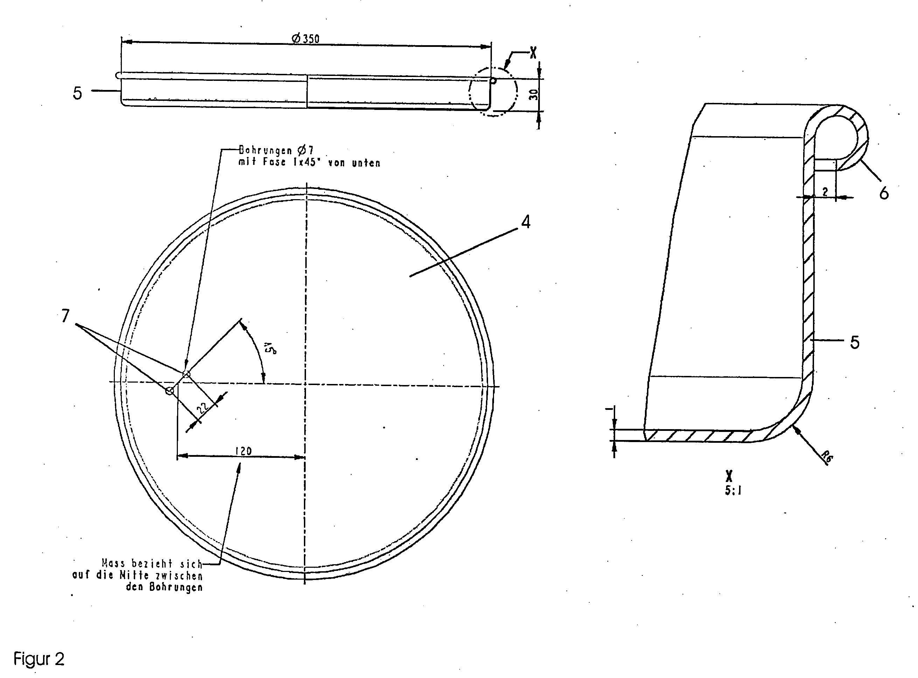

Diese Aufstellfläche 4 ist gemäß den Darstellungen nach Fig. 2 im wesentlichen kreisrund und mit einem umlaufenden Rand 5 versehen.

Das obere Ende des umlaufenden Randes 5 geht in eine Rundung oder Kröpfung 6 über, welche stabilitätserhöhend wirkt.

In einem außermittigen Abschnitt der Aufstellfläche 4 sind gemäß der Darstellung nach Fig. 2 zwei Bohrungen 7 befindlich, die der Befestigung des Haltekörpers 1 dienen.

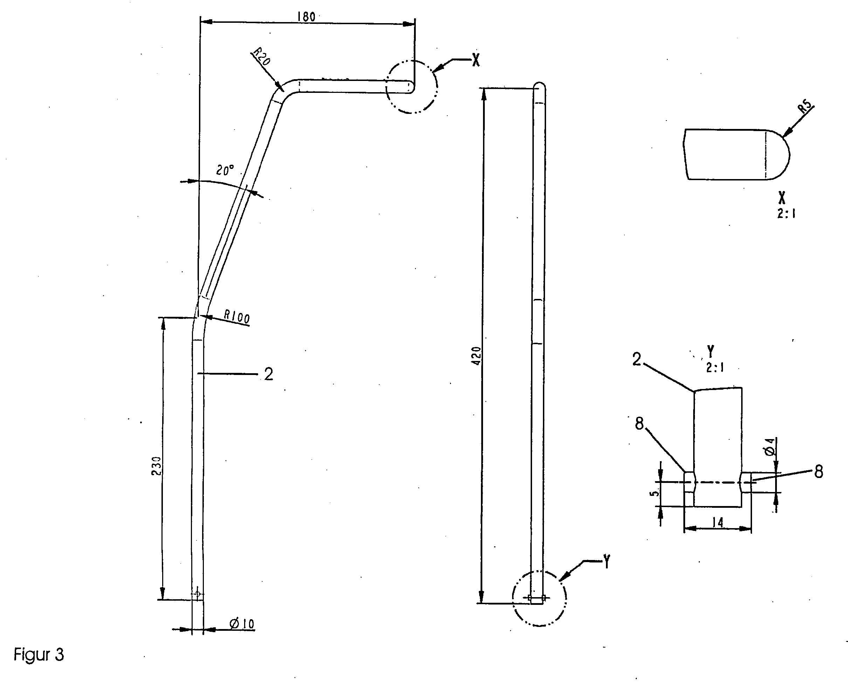

Der Träger gemäß Fig. 3 besteht aus einem Rundmaterial, z.B. einem metallischen Stab, der eine zweifache Kröpfung aufweist.

Am oberen Ende des Trägers ist eine Aufnahme für den Haltegriff 3 zum Zweck der Verbindung dieser beiden Mittel befindlich.

Das untere Ende des Trägers besitzt zwei gegenüberliegende Führungs- und Rastnasen 8 als bolzenartige Abschnitte.

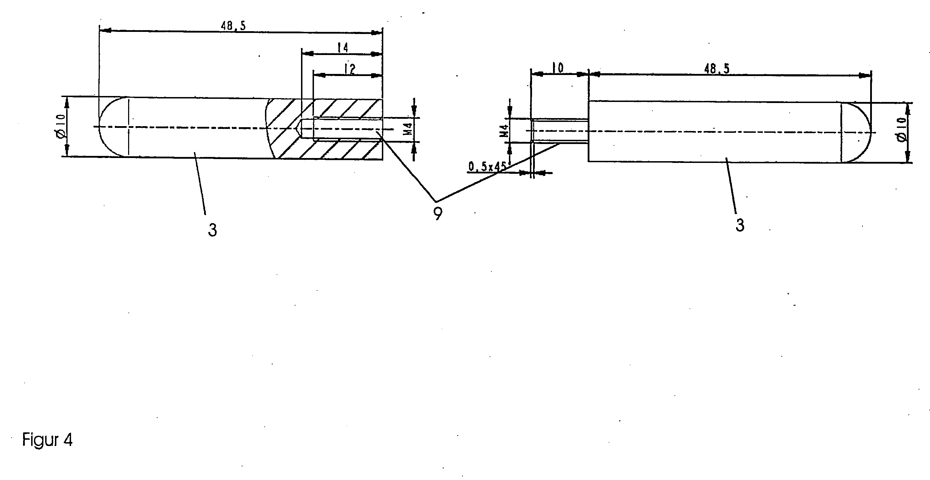

Der Haltegriff 3 kann gemäß Fig. 4 aus zwei Teilen bestehen, die über eine Gewindeverbindung 9 montiert werden können.

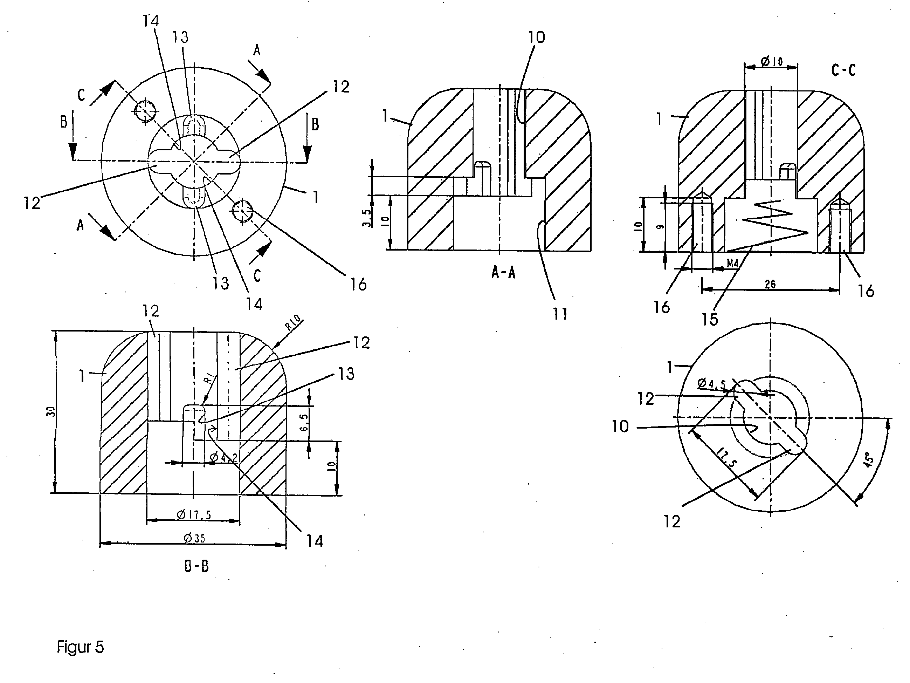

Einzelheiten des Haltekörpers sollen unter Bezugnahme auf die Fig. 5 nachstehend erläutert werden.

Der dort gezeigte quasi hohlzylindrische Haltekörper 1 besitzt eine Durchgangsbohrung mit abgestuftem Durchmesser.

Die Bohrung geringeren Durchmessers 10 befindet sich oberseitig. Eine Bohrung größeren Durchmessers 11 ist unterseitig angeordnet.

Im Bohrungsabschnitt geringeren Durchmessers 10 sind zwei gegenüberliegende, sich in Längsachsenrichtung erstreckende Führungsausnehmungen 12 vorgesehen.

Diese Führungsausnehmungen 12 nehmen die Führungs-und Rastnasen 8, die sich am unteren Ende des Trägers befinden, beim Einschieben desselben gleitend auf.

Zu den Führungsausnehmungen 12 versetzt angeordnet weist der Bohrungsabschnitt des kleineren Durchmessers 10 Rastrücksprünge 13 auf.

Diese Rastrücksprünge 13 erstrecken sich vom Bohrungsabschnitt größeren Durchmessers 11 aus in Richtung des Abschnitts mit dem geringeren, d.h. kleineren Durchmesser 10 und sind in diesen Abschnitt eingearbeitet.

Auf der Achse einer Winkelhalbierenden zwischen den Führungsausnehmungen 12 und den Rastrücksprüngen 13 ist mindestens eine, bevorzugt zwei gegenüberliegende Anschlagflächen 14 vorhanden.

Der Bohrungsabschnitt größeren Durchmessers 11 nimmt ein Federelement 15, z.B. in Form einer Kegelschraubendruckfeder auf.

Das dem Haltegriff 3 abgewandte Ende des Trägers 2, welches die zwei gegenüberliegenden Führungs- und Rastnasen 8 aufweist, wird von oben in die Bohrung kleineren Durchmessers 10 des Haltekörpers 1 eingeführt, wobei beim Einschieben oder Einführen des Trägerendes in die Bohrung des Haltekörpers entlang der Führungsausnehmungen 12 eine gleitende Bewegung möglich ist. Die Führungs- und Rastnasen 8 gelangen nach Drehung des Trägers 2 relativ zum Haltekörper 1 (beim Ausführungsbeispiel um 90°) in Eingriff mit den Rastrücksprüngen 13. Der Träger bzw. der Haltegriff wird dann unter Kraftwirkung des Federelements in dieser Position arretiert.

Im Boden des Haltekörpers 1 sind Befestigungsbohrungen 16 eingebracht. Diese Befestigungsbohrungen 16 können, wie in der Figur dargestellt, Zylindersacklochbohrungen sein, aber auch eine zum offenen Ende weisende konische Ausprägung besitzen. Im letzteren Fall wirkt diese konische Gestalt der Bohrungen zusammen mit einer konischen Ausformung der Bohrungen 7 im Bereich der Aufstellflächen zentrierend, was die Montage des Haltekörpers durch Schraubverbindung wesentlich erleichtert. Bei der Nutzung des komplett montierten Tabletts werden alle relevanten Kräfte von der Bohrung kleineren Durchmessers 10 in Verbindung mit den dort vorgesehenen Rastrücksprüngen, die den Träger quasi verankern, aufgenommen. Die Gefahr einer unerwünschten Entriegelung bzw. eines Lösens der Verbindung zwischen Träger und Haltekörper bzw. Träger und Aufstellfläche ist mit der vorgeschlagenen Lösung ausgeschlossen.

### Bezugszeichenliste

- 1: Haltekörper
- 2: Träger
- 3: -Haltegriff
- 4: Aufstellfläche
- 5: umlaufender Rand
- 6: Kröpfung
- 7: Bohrung
- 8: Führungs- und Rastnasen
- 9: Gewindeverbindung
- 10: Bohrung kleineren Durchmessers
- 11: Bohrung größeren Durchmessers
- 12: Führungsausnehmung
- 13: Rastrücksprung
- 14: Anschlagfläche
- 15: Federelement
- 16: Befestigungsbohrung

## Patentansprüche

1. Tablett mit einem einseitigen Träge (2), wobei ein oberer Haltegriff (3) des Trägers (2) über dem Mittel- oder Schwerpunkt einer Aufstellfläche (4) des Tabletts angeordnet ist und der Träger (2) in lösbarer Verbindung mit der Aufstellfläche (4) steht, sowie zum Zweck der Verbindung zwischen Träger (2) und Aufstellfläche (4) ein auf der Aufstellfläche (4) befindlicher, deutlich außerhalb des Mittel- oder Schwerpunkts angeordneter Haltekörper (1) worgesehen ist,
**dadurch gekennzeichnet, dass**
der Haltekörper (1) eine Durchgangsbohrung (10,11) mit abgestuftem Durchmesser aufweist, wobei die Bohrung geringeren Durchmessers (10) zum Träger (2) und diejenige größeren Durchmessers (11) zur Aufstellfläche (4) orientiert ist,
im Bohrungsabschnitt geringeren Durchmessers (10) zwei gegenüberliegende, sich in Längsrichtung erstreckende, nutförmige Führungsausnehmungen (12) befindlich sind, weiterhin der Bohrungsabschnitt kleineren Durchmessers (10) zwei gegenüberliegede, zu den Führungsausnehmungen (12) versetzt angeordnete Rastrücksprünge (13) aufweist, die sich vom Bohrungsabschnitt größeren Durchmessers (11) in Richtung des Abschnitts mit dem geringeren oder kleineren Durchmesser (10) erstrecken und in diesen eingearbeitet sind,
auf der Achse einer der Winkelhalbierenden zwischen den Führungsausnehmungen und Rastrücksprüngen (13) mindestens eine Anschlagfläche ausgebildet ist,
der Bohrungsabschnitt größeren Durchmessers (11) ein Federelement (15) aufweist,
das dem Haltegriff (3) abgewandte Ende des Trägers (2) zwei gegenüberliegende Führungs- und Rastnasen (8) aufweist, welche beim Einschieben dieses Trägerendes in die Bohrung (10,11) des Haltekörpers (1) entlang der Führungsausnehmungen (12) gleiten, wobei die Führungs- und Rastnasen (8) nach Drehung des Trägers (2) retativ zum Haltekörper (1) in die Rastrücksprünge eingreifen (13) und dort unter Kraftwirkung des Federelements arretiert werden.

2. Tablett nach Anspruch 1,
**dadurch gekennzeichnet , dass**
der Boden des Haltekörpers (1) mindestens zwei Zentrierelemente umfasst, welchen komplementäre Zentriergegenelemente der Aufstellfläche zugeordnet sind.

3. Tablett nach Anspruch 2,
**dadurch gekennzeichnet, dass**
die Zentrierelemente im Boden des Haltekörpers (1) als konische oder kegelige Ausnehmungen ausgebildet sind.

4. Tablett nach Anspruch 3,
**dadurch gekennzeichnet , dass**
die Zentrierelemente der Aufstellfläche konische oder kegelige Ausprägungen sind.

5. Tablett nach einem der vorangegangenen Ansprüche,
**dadurch gekennzeichnet , dass**
das Federelement (15) eine Schraubendruckfeder ist.

6. Tablett nach Anspruch 5,
**dadurch gekennzeichnet, dass**
das Federelement (15) eine kegelförmige Schraubendruckfeder ist.

7. Tablett nach einem der Ansprüche 1 bis 4,
**dadurch gekennzeichnet, dass**
das Federelement (15) als Tellerfeder ausgebildet ist.

8. Tablett nach einem der vorangegangenen Ansprüche,
**dadurch gekennzeichnet, dass**
der Haltekörper (1) eine Zylinderform aufweist, wobei die Haltekörperoberseite einen Rundungsradius aufweist.

9. Tablett nach einem der vorangegangenen Ansprüche,
**dadurch gekennzeichnet , dass**
die Führungsausnehmungen (12), die Rastrücksprünge (13), die Führungs- und Rastnasen (8) sowie das Federelement (15) ein Formgesperre bilden.

10. Tablett nach einem der vorangegangenen Ansprüche,
**dadurch gekennzeichnet , dass**
der Haltegriff (3) des Trägers (2) aus einem Stab oder Rohr besteht, dessen Durchmesser mindestens im Bereich der Führungs- und Rastnasen (8) als Passung dem Durchmesser des Bohrungsabschnitts (10,11) mit den Führungsausnehmungen (12) entspricht.

11. Tablett nach Anspruch 10,
**dadurch gekennzeichnet , dass**
das führungs- oder rastnasenseitige Ende des Rohrs oder Stabs eine umlaufende Fase aufweist.

12. Tablett nach einem der vorangegangenen Ansprüche,
**dadurch gekennzeichnet dass**
das obere Ende des Trägers (2) eine Bohrung zur Befestigung eines Griffbolzens umfasst, wobei der Griffbolzen senkrecht zum Träger verläuft und den Haltegriff bildet.

13. Tablett nach Anspruch 12,
**dadurch gekennzeichnet , dass**
der Griffbolzen zweigeteilt ausgeführt ist.

14. Tablett nach einem der vorangegangenen Ansprüche,
**dadurch gekennzeichnet, dass**
der Haltekörper mit der Aufstellfläche (4) verschraubt ist.

15. Tablett nach Anspruch 4 und 14,
**dadurch gekennzeichnet , dass**
die konischen oder kegeligen Ausprägungen in der Haltefläche die Köpfe der Befestigungsschrauben aufnehmen.

## Claims

1. Tray having a one-side carrier (2), wherein an upper handle (3) of the carrier (2) is arranged above the central point or center of gravity of a deposit surface (4) of the tray and the carrier (2) is detachably connected to the deposit surface (4), and a holder body (1) is provided for the purpose of a connection between the carrier (2) and the deposit surface (4), which is located on the deposit surface (4) and is arranged clearly outside the central point or center of gravity,
**characterized in that**
the holder body (1) has a through bore (10, 11) with a stepped diameter, wherein the smaller diameter bore (10) is oriented toward the carrier (2) and the larger diameter bore (11) is oriented toward the deposit surface (4),
two opposite groove-shaped guide recesses (12) extending in the longitudinal direction are located in the smaller diameter bore section (10),
further the smaller diameter bore section (10) includes two opposite snap-in recesses (13) which are arranged to be offset from the guide recesses (12) and extend from the larger diameter bore section (11) in the direction of the smaller diameter section (10) and are incorporated in the latter,
at least one stop face (14) is formed on the axis of one of the bisecting lines between the guide recesses and the snap-in recesses (13),
the larger diameter bore section (11) includes a spring element (15),
the end of the carrier (2) facing away from the handle (3) has two opposite guiding and snap-in lugs (8) which, when this carrier end is pushed into the bore (10, 11) of the holder body (1), slide along the guide recesses (12), wherein, after rotating the carrier (2) relative to the holder body (1), the guiding and snap-in lugs (8) engage into the snap-in recesses (13) and are locked there under the force action of a spring element (15).

2. Tray according to claim 1,
**characterized in that**
the bottom of the holder body (1) comprises at least two centering elements to which complementary centering counter-elements of the deposit surface are assigned.

3. Tray according to claim 2,
**characterized in that**
the centering elements are formed in the bottom of the holder body (1) as conical or tapered recesses.

4. Tray according to claim 3,
**characterized in that**
the centering elements of the deposit surface are conical or tapered raised portions.

5. Tray according to one of the preceding claims,
**characterized in that**
the spring element (15) is a helical compression spring.

6. Tray according to claim 5,
**characterized in that**
the spring element (15) is a cone-shaped helical compression spring.

7. Tray according to one of claims 1 to 4,
**characterized in that**
the spring element (15) is formed as a disc spring.

8. Tray according to one of the preceding claims,
**characterized in that**
the holder body (1) has a cylindrical shape, wherein the upper side of the holder body has a rounded radius.

9. Tray according to one of the preceding claims,
**characterized in that**
the guide recesses (12), the snap-in recesses (13), the guiding and snap-in lugs (8) as well as the spring element (15) form a positive locking mechanism.

10. Tray according to one of the preceding claims,
**characterized in that**
the handle (3) of the carrier (2) is formed of a rod or pipe whose diameter corresponds as a fit, at least in the region of the guiding and snap-in lugs (8), to the diameter of the bore section (10, 11) with the guide recesses (12).

11. Tray according to claim 10,
**characterized in that**
the end of the pipe or rod on the side of the guiding lug or snap-in lug includes a surrounding chamfer.

12. Tray according to one of the preceding claims,
**characterized in that**
the upper end of the carrier (2) includes a bore for fixing a handle bolt, wherein the handle bolt runs vertically relative to the carrier and forms the handle.

13. Tray according to claim 12,
**characterized in that**
the handle bolt is formed of two parts.

14. Tray according to one of the preceding claims,
**characterized in that**
the holder body is screwed to the deposit surface (4).

15. Tray according to claim 4 and 14,
**characterized in that**
the conical or tapered raised portions in the holding surface receive the heads of the fixing screws

## Revendications

1. Plateau doté d'un support (2) d'un seul côté, dans lequel une poignée de maintien supérieure (3) du support (2) est agencée au-dessus du centre géographique ou du centre de gravité d'une surface de pose (4) du plateau, et le support (2) est relié de façon détachable à la surface de pose (4), et dans le but de la liaison entre le support (2) et la surface de pose (4) il est prévu un corps de maintien (1) qui se trouve sur la surface de pose (4) et qui est agencé nettement à l'extérieur du centre géographique ou du centre de gravité,
**caractérisé en ce que**
le corps de maintien (1) comporte un perçage traversant (10, 11) avec un diamètre en gradins, dans lequel le perçage de plus faible diamètre (10) est orienté vers le support (2) et celui de plus fort diamètre (11) est orienté vers la surface de pose (4),
deux évidements de guidage opposés (12) en forme de rainures s'étendant en direction longitudinale se trouvent dans le tronçon de perçage de plus faible diamètre (10), et le tronçon de perçage de plus faible diamètre (10) comporte deux ressauts d'enclenchement (13) opposés, agencés de façon décalée par rapport aux évidements de guidage (12), qui s'étendent depuis le tronçon de perçage de plus fort diamètre (11) en direction du tronçon de plus faible ou de plus petit diamètre (10) et sont ménagés dans celui-ci,
au moins une surface de butée (14) est réalisée sur l'axe de l'une des bissectrices entre les évidements de guidage et les ressauts d'enclenchement (13), le tronçon de perçage de plus fort diamètre (11) comprend un élément de ressort (15), l'extrémité du support (2) détournée de la poignée de maintien (3) comporte deux tétons de guidage et d'enclenchement opposés (8) qui, lors de l'enfilement de cette extrémité du support dans le perçage (10, 11) du corps de maintien (1), coulissent le long des évidements de guidage (12), et après rotation du support (2) par rapport au corps de maintien (1), les tétons de guidage et d'enclenchement (8) s'engagent dans les ressauts d'enclenchement (13) et y sont arrêtés sous l'action de la force de l'élément de ressort (15).

2. Plateau selon la revendication 1,
**caractérisé en ce que** le fond du corps de maintien (1) comprend au moins deux éléments de centrage, auxquels sont associés des éléments de centrage antagonistes complémentaires de la surface utile.

3. Plateau selon la revendication 2,
**caractérisé en ce que** les éléments de centrage dans le fond du corps de maintien (1) sont réalisés comme des évidements coniques ou en forme de coin.

4. Plateau selon la revendication 3,
**caractérisé en ce que** les éléments de centrage de la surface de pose sont des reliefs coniques ou en forme de coin.

5. Plateau selon l'une des revendications précédentes,
**caractérisé en ce que** l'élément de ressort (15) est un ressort de compression hélicoïdal.

6. Plateau selon la revendication 5,
**caractérisé en ce que** l'élément de ressort (15) est un ressort de compression hélicoïdal de forme conique.

7. Plateau selon l'une des revendications 1 à 4,
**caractérisé en ce que** l'élément de ressort (15) est réalisé sous forme de rondelle Belleville.

8. Plateau selon l'une des revendications précédentes,
**caractérisé en ce que** le corps de maintien (1) présente une forme cylindrique, et la face supérieure du corps de maintien présente un rayon d'arrondi.

9. Plateau selon l'une des revendications précédentes,
**caractérisé en ce que** les évidements de guidage (12), les ressauts d'enclenchement (13), les tétons de guidage et d'enclenchement (8) et l'élément de ressort (15) constituent un verrouillage à coopération de formes.

10. Plateau selon l'une des revendications précédentes,
**caractérisé en ce que** la poignée de maintien (3) du support (2) est constituée d'un barreau ou d'un tube dont le diamètre correspond, à titre d'ajustement au moins dans la région des tétons de guidage et d'enclenchement (8), au diamètre du tronçon de perçage (10, 11) doté des évidements de guidage (12).

11. Plateau selon la revendication 10,
**caractérisé en ce que** l'extrémité du tube ou du barreau située du côté des tétons de guidage ou d'enclenchement comporte un chanfrein périphérique.

12. Plateau selon l'une des revendications précédentes,
**caractérisé en ce que** l'extrémité supérieure du support (2) comporte un perçage pour la fixation d'un goujon de poignée, le goujon de poignée s'étendant perpendiculairement au support et formant la poignée de maintien.

13. Plateau selon la revendication 12,
**caractérisé en ce que** le goujon de poignée est réalisé en deux pièces.

14. Plateau selon l'une des revendications précédentes,
**caractérisé en ce que** le corps de maintien est assemblé par vissage avec la surface de pose (4).

15. Plateau selon la revendication 4 et 14,
**caractérisé en ce que** les reliefs coniques ou en coin dans la surface de maintien reçoivent les têtes des vis de fixations.
